# FASCICULE DE BREVET EUROPEEN

(11) **EP 0 429 377 B1**
(45) Date de publication et mention de la délivrance du brevet: **02.03.1994**
(21) Numéro de dépôt: 90420492.2
(22) Date de dépôt: 15.11.1990
(51) Int. Cl.: F16D 1/12, F01L 1/34, F16H 53/04

(54) **Poulie réglable d'entrainement d'un arbre d'un moteur automobile et son utilisation**
Verstellbare Riemenscheibe einer Welle von einem KFZ-Motor und seine Verwendung
Adjustable pulley for driving a shaft of a car engine and use thereof

(30) Priorité: 17.11.1989 FR 8915742
(43) Date de publication de la demande: 29.05.1991
(73) Titulaire: SINTERTECH, F-92400 Courbevoie (FR)
(72) Inventeur: Gueydan, Henri, F-38430 Moirans (FR)
(74) Mandataire: Séraphin, Léon

(56) Documents cités:
- DE-A- 2 506 879
- GB-A- 192 295
- US-A- 3 338 112
- US-A- 3 490 303
- US-A- 4 096 836

## Description

L'invention concerne une poulie réglable d'entraînement d'un arbre automobile, entraînant par exemple un arbre à cames commandant une pompe à injection dans un mécanisme automobile.

On connaît une telle poulie réglable, comprenant une couronne crantée et un moyeu à 3 branches radiales disposées en étoile, la couronne et le moyeu étant solidarisés par trois vis et écrous, chaque vis traversant une fente allongée ou lumière de la couronne et une branche du moyeu. Ces vis étant desserrées, on peut régler l'orientation relative du moyeu et de la couronne en agissant sur un relief six pans porté par le centre du moyeu. Ce réglage, habituellement à la clef à molette, est qualitatif et il ne peut être employé qu'avant montage.
L'arbre nervuré entraînant le mécanisme automobile, par exemple une pompe à injection, est fixé au moyeu qu'il traverse dans une ouverture profilée du centre de ce moyeu. Cette poulie réglable, dont la couronne et moyeu sont solidarisés après le réglage d'orientation relative décrit ci-dessus est habituellement entraînée par une courroie crantée, différentes poulies réglables pouvant ainsi se succéder.

Le mode de réglage d'orientation relative ou de réglage angulaire ainsi décrit est peu précis, et les imprécisions angulaires se cumulent lorsqu'il y a plusieurs poulies réglables se succédant. Le reproductibilité de ces réglages d'un moteur à l'autre est de ce fait déficiente.

On connaît par ailleurs par le brevet US-A-4096836 une autre poulie réglable d'un moteur automobile, cette poulie comportant une couronne ainsi qu'un moyeu réglable en rotation auquel ledit arbre est fixé et, pouvant être immobilisé par rapport à cette couronne, les moyens de rotation relative du moyeu par rapport à la couronne comprenant des reliefs de cette couronne ainsi que des moyens pouvant s'appuyer sur ledit moyeu de façon à tourner sur eux-mêmes en un emplacement fixe de ce moyeu en coopérant avec les reliefs de la couronne et en produisant alors un mouvement relatif continu du moyeu par rapport à la couronne.

Dans cette poulie réglable, les reliefs de la couronne ou pignon sont les côtés d'une ouverture de cette couronne et les moyens pouvant s'appuyer sur le moyeu de façon à tourner sur eux-mêmes en un emplacement fixe de ce moyeu consistent en un boulon à vis spécial portant une came excentrée ainsi qu'une tête creuse dans laquelle s'engage une clef extérieure pour faire tourner ce boulon préalablement desserré.
La came porte alors contre un côté de l'ouverture de la couronne et fait tourner cette couronne.

Le réglage relatif angulaire obtenu avec la poulie réglable précédente manque de précision et de reproductibilité, il ne permet pas d'éviter les inconvénients cités précédemment.

La demanderesse a cherché à mettre au point une poulie réglable évitant de tels inconvénients.

### EXPOSE DE L'INVENTION

L'invention a pour objet une poulie réglable d'entraînement d'un arbre d'un moteur automobile, par exemple un arbre à cames commandant une pompe à injection, cette poulie comportant une couronne ainsi qu'un moyeu réglable en rotation auquel ledit arbre est fixé et pouvant être immobilisé par rapport à cette couronne, les moyens de rotation relative du moyeu par rapport à la couronne comprenant des reliefs de cette couronne ainsi que des moyens pouvant s'appuyer sur ledit moyeu de façon à tourner sur eux-mêmes en un emplacement fixe de ce moyeu en coopérant avec les reliefs de la couronne et en produisant alors un mouvement relatif et rotatif continu du moyeu par rapport à la couronne, caractérisé en ce que lesdits reliefs de la couronne sont une denture portée par cette couronne et en ce que lesdits moyens pouvant s'appuyer sur le moyeu sont une clef dentée pouvant être fixée directement sur le moyeu et coopérer alors par sa denture avec la denture de la couronne, ledit mouvement rotatif donnant un réglage précis et reproductible de l'orientation relative du moyeu. C'est donc alors cette clef elle-même qui produit le réglage, de façon particulièrement simple et commode.

Alors que la poulie réglable du document cité ne permettait qu'un réglage imprécis de l'orientation relative du moyeu, et donc de la section droite de l'arbre fixé à ce moyeu, la poulie réglable de l'invention permet d'obtenir un réglage continu, précis et reproductible de ladite orientation relative du moyeu par rapport à la couronne au moyen de sa clef dentée. L'usage de cette clef d'axe de rotation typiquement perpendiculaire à la face frontale du moyeu permet alors de régler ou de retoucher le réglage facilement après assemblage du système d'entraînement.

La précision et la reproductibilité du réglage sont encore améliorés et deviennent excellentes par l'inscription ou le gravage de graduations ou repères sur les deux surfaces visibles qui se déplacent l'une par rapport à l'autre lors d'un réglage : une portion de la couronne et une portion du moyeu.

De façon commode, le moyen de fixation en position de réglage de la clef dentée sur le moyeu consiste en un trou de ce moyeu, dans lequel s'engage l'extrémité inférieure non dentée de cette clef pour le réglage en rotation relative dudit moyeu. Ce trou est borgne, ou plus commodément il traverse le moyeu, la surface de dessous de la denture de la clef venant alors s'appuyer sur le moyeu lorsque cette clef tourne en entraînant le moyeu par rapport à la couronne.

De préférence, les surfaces actives des dents de la couronne, désignées en raccourci par "la denture de la couronne" sont parallèles à l'axe de symétrie et de rotation de cette couronne et portées par son bord intérieur, tandis que la denture de la clef dentée est parallèle à son axe de rotation sur elle-même et s'encastre dans la denture de la couronne, lorsque la clef est fixée en position sur le moyeu pour le réglage en rotation du moyeu. Cette disposition est la meilleure pour l'usinage ou la préparation des moyens concernés, à savoir : la denture de la couronne, le moyen de fixation ou maintien en position de la clef porté sur le moyeu, et la clef dentée elle-même. Cette disposition permet aussi la mise en rotation la plus facile, l'effort correspondant étant perpendiculaire à l'axe de rotation de la clef.

Le moyeu comporte souvent 2 à 5, typiquement 3, branches sensiblement radiales, leur contour en position d'assemblage à la couronne dépassant le contour intérieur de cette couronne alors que le centre du moyeu est intérieur à ce contour intérieur. Dans ce cas, on préfère disposer sur chaque branche du moyeu, et sur chaque portion de couronne située en face de cette branche pour un réglage d'angle moyen du moyeu, respectivement une denture et un moyen de fixation d'une clef dentée, qui permet alors de faire le réglage en rotation du moyeu selon l'invention en des positions variées. Cette disposition est particulièrement avantageuse pour les réglages en position après assemblage du dispositif d'entraînement.

Les moyens d'immobilisation du moyeu par rapport à la couronne après le réglage en rotation consistent en une ou plusieurs ouvertures ou lumières circonférentielles traversant la couronne et en des moyens de serrage permettant de solidariser la couronne et le moyeu, par exemple au droit de chaque lumière un trou de passage d'une vis traversant le moyeu ainsi que des vis et écrou appropriés. Ces moyens de serrage sont légèrement desserrés pour permettre la rotation lors d'un réglage, ils sont resserrés ensuite. Les réglages angulaires effectués soit au départ, soit en position avec la poulie réglable de l'invention atteignent typiquement plus ou moins 12 à 25° de part et d'autre d'une position angulaire moyenne du moyeu, typiquement une position dans laquelle l'axe de symétrie d'une branche de ce moyeu traverse le milieu d'une denture de la couronne.

Les exemples et les dessins qui les illustrent permettront de mieux faire comprendre l'invention.

La figure 1 représente un pignon réglable selon l'invention en vue de dessus, sa clef dentée étant représentée sans sa tête.

La figure 2 représente une clef dentée utilisée pour le réglage en rotation relative du pignon de la figure 1.

La figure 3 représente le contour des dentures de la couronne du pignon et de la clef, en agrandissement d'une partie de la figure 1.

La figure 4 montre une partie d'un système d'entraînement comprenant une poulie réglable selon l'invention, en perspective partiellement éclatée.

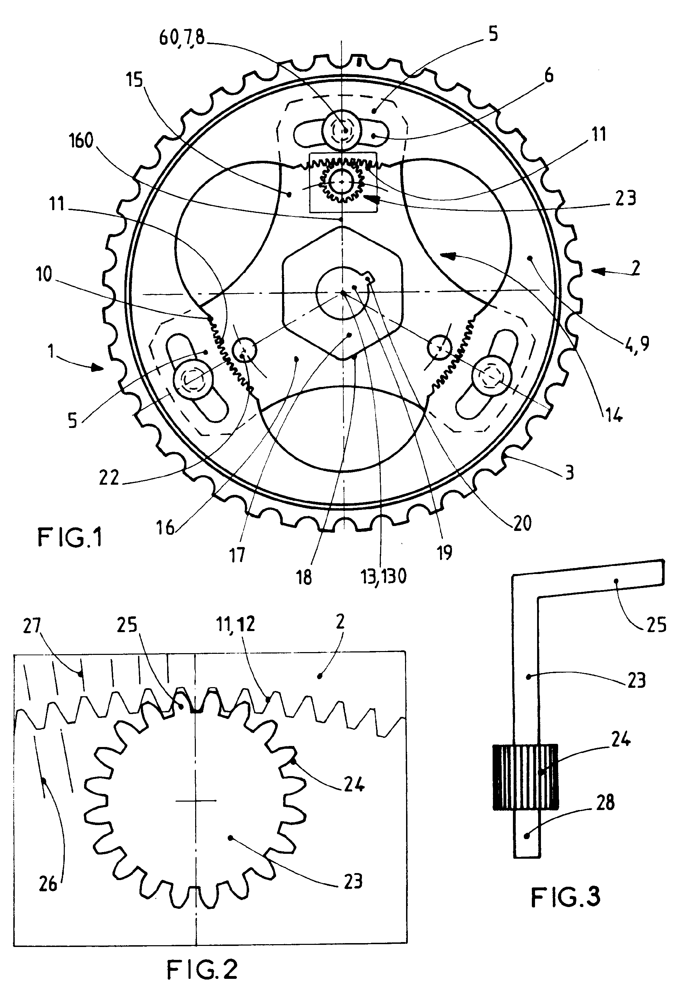

Sur la figure 1, on peut voir une poulie réglable 1 comprenant d'une part une couronne 2 en acier fritté portant une denture extérieure 3 permettant son entraînement en rotation par une courroie crantée et une bordure ou flasque 4 intérieure comportant trois portions larges 5, comportant chacune une ouverture ou lumière allongée 6 circonférentielle, lumière 6 de largeur 6,5 mm et de distance moyenne à l'axe 13 de la couronne 2 égale à 41 mm, permettant le passage d'une vis 7 à tête 8 à bloquer par un écrou et trois portions étroites intermédiaires 9 se raccordant avec les portions larges voisines. Les dimensions principales de cette couronne 2 sont les suivantes : diamètre extérieur 120 mm, diamètre frontal de la bordure 4= 108 mm, épaisseur de cette bordure 8 mm, largeur intérieure des portions larges 5= 20mm, largeur intérieure des portions étroites 9=8 mm. La couronne 2 comporte en outre sur le bord intérieur 10 de chaque portion large 5 une denture 11 dont les surfaces de dents 12 sont parallèles à l'axe de rotation 13 ou axe de symétrie ternaire de la couronne 2. L'ajout de telles dentures 11 (fig. 1 et 3) sur une couronne telle que 2 est une modification simple, ici réalisée par usinage.

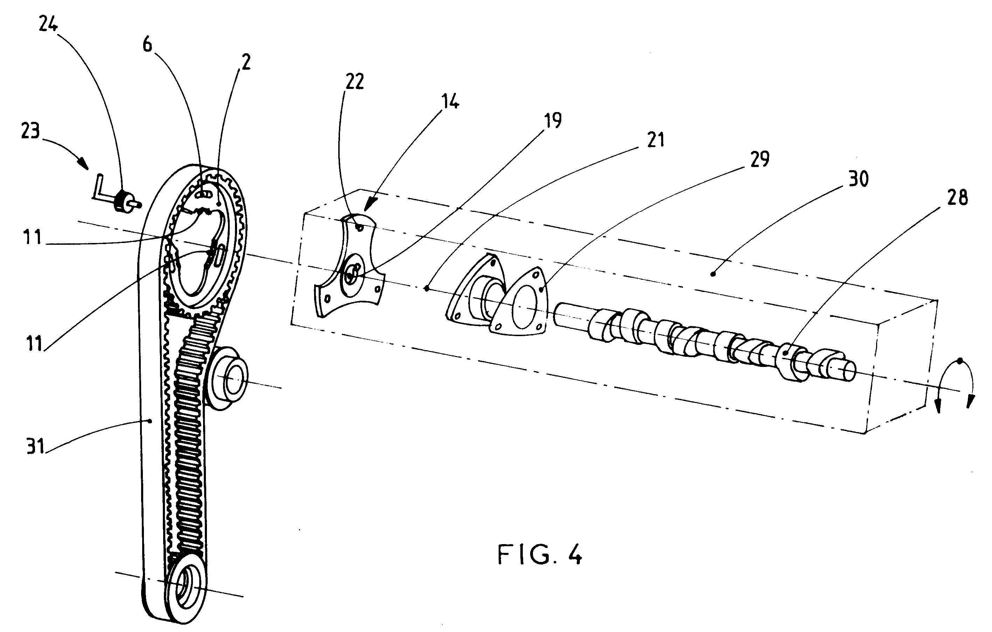

La poulie réglable 1 comprend d'autre part un moyeu 14, également en acier fritté, ayant trois branches 15 dont les axes de symétrie 160 sont radiaux, chaque branche 15 comportant près de son extrémité un trou de passage 60 d'une vis telle que 7. Les vis 7 à tête 8 et les écrous correspondants permettent de solidariser la couronne 2 et le moyeu 14 dans une orientation relative choisie. Le moyeu 14 comporte dans sa portion centrale 16 une surépaisseur 17 de pourtour 18 cylindrique hexagonale constituant un moyen de préhension du moyeu 14 pour le faire tourner par rapport à la couronne 2 quand les écrous 8 sont desserrés. Cette surépaisseur 17 de hauteur droite 9,5 mm porte un trou central 19 tronconique ayant un contour en section droite circulaire interrompu par la présence d'une rainure de clavette 20, permettant le blocage en position de l'extrémité d'un arbre tel que 21 (schéma de la figure 4) dans l'ouverture 19. La distance de l'axe de chaque trou 60 à l'axe 130 du moyeu 14 est de 41 mm. Chaque trou 60 vient ainsi en face d'une ouverture ou lumière 6 de la couronne 2 quelle que soit l'orientation relative du moyeu 14 par rapport à la couronne 2, dans les limites fixées par l'extension circonférentielle des ouvertures 6. La position angulaire du moyeu 14 par rapport à la couronne 2 peut varier ici de plus ou moins 17° par rapport à la position moyenne représentée sur la figure 1.

Le moyeu 14 comporte encore selon l'invention trois trous circulaires traversants tels que 22, de diamètre 6 mm, centrés sur l'axe de symétrie 16 de chacune de ses branches 15 à 28,3 mm de l'axe 130, ces trous 22 servant à la fixation d'une clef dentée 23, par encastrement de sa portion inférieure 28 dans un trou 22, la denture 24 venant alors reposer par sa face inférieure sur la face frontale du moyeu 14 tout en s'imbriquant par plusieurs de ses dents 25 dans une denture 11 en forme de crémaillère de la couronne 2 (figures 1 et 2). Les profils des dents 25 sont amincis vers leurs extrémités de façon à pénétrer facilement entre les faces des dents 12 de la couronne 2, et à s'encastrer sur au moins 70% de leur longueur entre ces dents 12 au maximum de leur engagement (figure 3).

Le diamètre extérieur de la denture 24 de la clef 23 est ici de 11 mm, et la distance du fond des dents de la denture 11 de la couronne à l'axe 13 de la couronne 2 est de 34 mm, ce qui donne un bon encastrement des dentures 24 et 11 et un entraînement continu du moyeu 14 par rapport à la couronne 2 lorsqu'on fait tourner la clef 23 au moyen de sa portion de préhension ou tête 25 (figure 2).

Comme le montre la figure 3, une branche 15 au moins du moyeu 14 -et de préférence ses trois branches pour s'adapter à des positions quelconques du moyeu 14- comporte des traits repères radiaux 26 permettant de repérer avec précision l'orientation obtenue par rapport à la couronne 2 portant juste en arrière de sa denture 11 d'autres traits repères radiaux 27. Cette disposition permet un réglage d'orientation et d'éventuelles corrections de ce réglage plus précis, et d'obtenir des réglages reproductibles.

Sur le schéma de la figure 4, on voit un arbre 21 portant des cames 28 et commandant le fonctionnement d'une pompe à injection, le moyeu 14 selon l'invention dont l'ouverture centrale 19 permet de fixer cet arbre 21 avec une orientation définitive par rapport à ce moyeu 14 et des pièces 29 de fixation de ce même arbre 21 à un bâti 30. On voit d'autre part une couronne 2 selon l'invention ayant trois dentures de réglage d'orientation relative telles que 11 et les ouvertures ou lumières 6 de passage des vis de fixation 7 (figure 1) associées à chacune de ces dentures 11 qui sont décalées dans la courroie crantée 31 d'un système d'entraînement. Le moyeu 14 auquel l'arbre 21 a été fixé va être lui-même fixé à la couronne 2 et des écrous 60 au moyen des vis 7 (fig. 1) et des écrous correspondants, ces écrous n'étant pas serrés pour permettre le réglage d'orientation relative précise du moyeu 14 par rapport à la couronne 2 au moyen de la clef dentée 23, encastrée dans un des trois trous 22 du moyeu 14, et de la denture 11 de la couronne 2 dans laquelle la denture 24 de la clef pénètre. Les pièces 14 et 2 portent des traits de repères analogues à ceux 26 et 27 de la figure 3, ces traits de repère ne sont pas représentés sur la figure 4.

Ce réglage d'orientation relative précise peut être fait ou corrigé ultérieurement par desserrage des moyens de fixation 7 du moyeu 14 à la couronne 2, réglage d'orientation relative avec la clef 23 venant facilement en position dans un trou 22 par le glissement de sa denture 24 dans la denture 11 de la couronne 2 qui est choisie selon la position de cette couronne 2 et la facilité d'accès de l'opérateur.

L'emploi de poulies réglables 1 successives, utilisant par exemple une même clef de réglage 23 pour faciliter les retouches de réglage sur ces différentes poulies 1, résoud complètement les problèmes de cumul des imprécisions angulaires de l'art antérieur.

### APPLICATIONS

L'invention s'applique au réglage d'orientation précis de tout arbre, typiquement un arbre à cames, ayant un effet sur le fonctionnement d'un organe automobile, cet organe étant par exemple un dispositif d'alimentation en fluide ou de combustion, par exemple encore une pompe à injection.

## Revendications

1. Poulie réglable (1) d'entraînement d'un arbre (21) d'un moteur automobile, cette poulie (1) comportant une couronne (2) ainsi qu'un moyeu (14) réglable en rotation auquel ledit arbre (21) est fixé et pouvant être immobilisé par raport à cette couronne (2), les moyens de rotation relative du moyeu (14) par rapport à la couronne (2) comprenant des reliefs (11) de cette couronne (2) ainsi que des moyens (23) pouvant s'appuyer sur ledit moyeu (14) de façon à tourner sur eux-mêmes en un emplacement fixe (22) de ce moyeu (14) en coopérant avec les reliefs (11) de la couronne (2) et en produisant alors un mouvement relatif et rotatif continu du moyeu par rapport à la couronne, caractérisé en ce que lesdits reliefs (11) de la couronne (2) sont une denture (11) portée par cette couronne (2) et en ce que lesdits moyens (23) pouvant s'appuyer sur le moyeu (14) sont une clef dentée (23) pouvant être fixée directement sur le moyeu (14) et coopérer alors par sa denture (24) avec la denture (11) de la couronne (2), ledit mouvement rotatif donnant un réglage précis et reproductible de l'orientation relative du moyeu.

2. Poulie (1) selon la revendication 1, dans laquelle la clef dentée (23) comporte une extrémité inférieure non dentée (28) et dans laquelle le moyeu (14) comporte un trou (22) dans lequel s'engage ladite extrémité inférieure (28) pour ledit réglage en rotation du moyeu (14).

3. Poulie (1) selon la revendication 2, dans laquelle la denture (24) de ladite clef (23) a une surface de dessous qui s'appuie sur ledit moyeu (14) lorsque ladite clef (23) tourne sur elle-même pour ledit réglage en rotation du moyeu (14).

4. Poulie selon l'une quelconque des revendications 1 à 3, dans laquelle la denture (11) de ladite couronne (2) est parallèle à son axe (13) et portée par son bord intérieur (10), la denture (24) de la clef dentée (23) étant parallèle à son axe de rotation sur elle-même et s'encastrant dans ladite denture (11) de la couronne (2) lorsque la clef (23) est fixée sur le moyeu (14).

5. Poulie (1) selon l'une quelconque des revendications 1 à 4, dans laquelle des traits de repères (26;27) sont portés par le moyeu (14) d'une part et par la couronne (2) d'autre part de façon à permettre des réglages en rotation précis du moyeu (14) par rapport à la couronne (2).

6. Poulie (1) selon l'une quelconque des revendications 1 à 5, dont le moyeu (14) comporte 2 à 5 branches radiales (15), chaque branche (15) et chaque portion de couronne (5) située en face de cette branche (15) pour une orientation relative moyenne dudit moyeu (14) comportant respectivement une denture (11) et un trou de fixation (22) d'une clef dentée (23) permettant de faire ledit réglage en rotation dudit moyeu (14) en des positions variées.

7. Poulie (1) selon l'une quelconque des revendications 1 à 5, dans lequel les moyens d'immobilisation dudit moyeu (14) par rapport à la dite couronne (2) consistent en des lumières circonférentielles (6) traversant ladite couronne (2) et en des moyens de serrage (7 et 60) permettant de solidariser la couronne (2) et le moyeu (14).

8. Utilisation de la poulie réglable (1) de l'une quelconque des revendications 1 à 7 pour l'entraînement d'un arbre à cames commandant une pompe à injection.

## Patentansprüche

1. Verstellbare Antriebsscheibe (1) einer Welle (21) in einem KFZ-Motor, wobei die Antriebsscheibe (1) einen Kranz (2) sowie eine drehverstellbare Nabe (14) aufweist, an der die Welle (21) befestigt ist und im Verhältnis zu diesem Kranz (2) verriegelt werden kann, wobei die Mittel zur relativen Drehung der Nabe (14) im Verhältnis zum Kranz (2) Erhöhungen (11) dieses Kranzes sowie Mittel (23) aufweisen, die sich auf die Nabe (14) abstützen können, so daß sie im Zusammenwirken mit den Erhöhungen (11) des Kranzes (2) um sich selbst an einer festgelegten Stelle (22) der Nabe (14) drehen und dann eine stetige relative Drehbewegung der Nabe im Verhältnis zum Kranz erzeugen, dadurch gekennzeichnet, daß die Erhöhungen (11) des Kranzes (2) eine von diesem Kranz (2) getragene Verzahnung (11) sind und daß die sich auf der Nabe (14) abstützenden Mittel (23) einen gezahnten Schlüssel (23) darstellen , die unmittelbar auf der Nabe (14) angebracht werden und dann mit dessen Verzahnung (24) und der Verzahnung (11) des Kranzes (2) zusammenwirken kann, wobei die Drehbewegung eine genaue und reproduzierbare Einstellung der relativen Ausrichtung der Nabe ergibt.

2. Antriebsscheibe (1) nach Anspruch 1, bei welcher der gezahnte Schlüssel (23) ein unteres, nicht gezahntes Ende (28) aufweist und die Nabe (14) ein Loch (22) aufweist, in welches das untere Ende (28) für die Dreheinstellung der Nabe (14) eingreift.

3. Antriebsscheibe (1) nach Anspruch 2, bei welcher die Verzahnung (24) des Schlüssels (23) eine untere Fläche aufweist, die sich auf der Nabe (14) abstützt, wenn sich der Schlüssel (23) für die Dreheinstellung der Nabe (14) um sich selbst dreht.

4. Antriebsscheibe nach einem der Ansprüche 1 bis 3, bei welcher die Verzahnung (11) des Kranzes (2) zu dessen Achse (13) parallel ist und von dessen innerem Rand (10) getragen wird, wobei die Verzahnung des gezahnten Schlüssels (23) parallel zu dessen Drehachse um sich selbst ist und sich in die Verzahnung (11) des Kranzes (2) einfügt (einsetzt), wen der Schlüssel auf der Nabe (14) befestigt ist.

5. Antriebsscheibe (1) nach einem der Ansprüche 1 bis 4, bei welcher Bezugsstriche (26; 27) einerseits von der Nabe (14) andereseits von dem Kranz (2) aufgebracht werden, um genaue Dreheinstellungen der Nabe (14) im Verhältnis zum Kranz (2) zu ermöglichen.

6. Antriebsscheibe (1) nach einem der Ansprüche 1 bis 5, deren Nabe (14) 2 bis 5 radiale Schenkel (15) aufweist, wobei jeder Schenkel (15) und jeder dem jeweiligen Schenkel (15) gegenüberliegende Kranzabschnitt (5) zur mittleren relativen Ausrichtung der Nabe (14) je eine Verzahnung (11) und ein Befestigungsloch (22) eines gezahnten Schlüssels (23)aufweist, um die Dreheinstellung der Nabe (14) in verschiedenen Stellungen zu ermöglichen.

7. Antriebsscheibe (1) nach einem der Ansprüche 1 bis 5, bei welcher die Verriegelungsmittel der Nabe (14) im Verhältnis zum Kranz (2) aus durch den Kranz (2) hindurchgehenden Umfangsschlitzen (6) und aus Spannmitteln (7 und 60) bestehen, mit welchen der Kranz (2) mit der Nabe (14) fest verbunden werden kann.

8. Verwendung der einstellbaren Antriebsscheibe (1) nach einem der Ansprüche 1 bis 7 für den Antrieb einer Nockenwelle zur Steuerung einer Einspritzpumpe.

## Claims

1. An adjustable pulley (1) for driving a shaft (21) of a car engine, the pulley (1) comprising a rim (2) and also a hub (14) which can be adjusted in rotation, to which said shaft (21) is fixed, and being able to be immobilised relative to the rim (2), the means for relative rotation of the hub (14) in relation to the rim (2) having contours (11) of the rim (2) and also means (23) capable of bearing on said hub (14) in such a way that they rotate on themselves when the hub (14) is in a fixed position (22) by cooperating with the contours (11) of the rim (2) and by thus producing a continuous relative and rotating movement of the hub relative to the rim, characterised in that said contours (11) of the rim (2) are a toothed configuration (11) carried by the rim (2), and in that said means (23) which are able to bear on the hub (14) are a toothed key (23) which is able to be fixed directly to the hub (14) and to thus cooperate by way of its tooth configuration (24) with the tooth configuration (11) of the rim (2), said rotating movement providing accurate and reproducible control of the relative orientation of the hub.

2. A pulley (1) according to Claim 1, wherein the toothed key (23) has a lower end (28) which is not toothed, and wherein the hub (14) has a hole (22) in which said lower end (28) engages to control said rotational movement of the hub (14).

3. A pulley (1) according to Claim 2, wherein the tooth configuration (24) of said key (23) has a bottom surface which bears on said hub (14) when said key (23) rotates on itself to control said rotational movement of the hub (14).

4. A pulley according to any one of Claims 1 to 3, wherein the tooth configuration (11) of said rim (2) is parallel to its axis (13) and carried by its inner edge (10), the tooth configuration (24) of the toothed key (23) being parallel to the axis along which it rotates on itself, and fitting into said tooth configuration (11) of the rim (2) when the key (23) is fixed on the hub (14).

5. A pulley (1) according to any one of Claims 1 to 4, wherein reference marks (26; 27) are provided on the hub (14), on the one hand, and on the rim (2), on the other hand, in such a way as to permit accurately controlled rotational movement of the hub (14) relative to the rim (2).

6. A pulley (1) according to any one of Claims 1 to 5, the hub (14) of which comprises 2 to 5 radial limbs (15), each limb (15) and each rim portion (5) disposed opposite the limb (15) for mean relative orientation of said hub (14) comprising respectively a tooth configuration (11) and a fixing hole (22) for a toothed key (23) enabling said hub (14) to be rotated in controlled manner in various positions.

7. A pulley (1) according to any one of Claims 1 to 5, wherein the means for immobilising said hub (14) relative to said rim (2) consist of circumferential apertures (6) which pass through said rim (2) and of clamping means (7 and 60) which enable the rim (2) and the hub (14) to be fixed together.

8. Use of the adjustable pulley (1) according to any one of Claims 1 to 7 for driving a cam shaft controlling an injection pump.
